**Europäisches Patentamt**

**European Patent Office**

**Office européen des brevets**

(11) Publication number: **0 120 640**
**B1**

(12) **EUROPEAN PATENT SPECIFICATION**

(45) Date of publication of patent specification: **01.02.89**

(21) Application number: **84301637.9**

(22) Date of filing: **12.03.84**

(51) Int. Cl.⁴: **H 04 L 11/16, H 04 B 3/54**

(54) Data distribution network.

(30) Priority: **15.03.83 GB 8307149**

(43) Date of publication of application:
**03.10.84 Bulletin 84/40**

(45) Publication of the grant of the patent:
**01.02.89 Bulletin 89/05**

(84) Designated Contracting States:
**DE FR GB IT NL SE**

(56) References cited:
**DE-A-2 826 320**
**GB-A-2 063 023**
**US-A-3 418 631**
**US-A-3 866 147**
**US-A-4 253 185**

**THE POST OFFICE ELECTRICAL ENGINEERS
JOURNAL, vol. 74, no. 4, January 1982, pages
335-344, Old Woking, Surrey, GB; T.C. WRIGHT
et al.: "8.448 Mbit/s digital line systems on
carrier cables"**

(73) Proprietor: **EMI Limited
Blyth Road
Hayes Middlesex, UB3 1BP (GB)**

(72) Inventor: **Fairbairn, Ian Anthony
21, Horsequards Drive
Maidenhead Berkshire, SL6 1XL (GB)**

(74) Representative: **Marsh, Robin Geoffrey
Thorn EMI Patents Limited The Quadrangle
Westmount Centre Uxbridge Road
Hayes Middlesex, UB4 0HB (GB)**

Courier Press, Leamington Spa, England.

**Description**

The present invention relates to a data distribution network particularly but not exclusively a broadband local area network, and to equipment for use with a network.

In a broadband local area network with multiple access from separate transmitters, it is possible that two different data signals will collide during transmission thereby causing corruption of the data. Also a data signal may be corrupted by spurious other signals on the network. Corruption of either type can have unfortunate consequences particularly when the network is a mains signalling control system for a building.

An object of the invention is to provide a network which utilizes signals having a readily-identifiable characteristic which changes upon combination of signals.

The present invention provides a data distribution network having:

a pathway along which information signals can be sent;

a plurality of stations, interconnected by the pathway, for reception and/or transmission of information signals;

means to determine the occurrence of a corruptive collision between signals in the network;

the collision-determining means comprising means to generate a digital signal for transmission within the network, said signal being formed of a plurality of elements of which at least one, the collision-responsive element(s), is formed of one of a number of predetermined permutations of multiple-state digits, whereby any significant corruptive collision of said signal with another causes the collision-responsive element(s) to assume a permutation other than the predetermined permutations;

the collision-determining means further comprising means, in at least one of the stations, to detect whether a corruption-responsive element in a signal has one of the predetermined permutations.

Within the context of this patent specification, the term "multiple-state digit" means that the digit has one state out of a given number of possible states in the way that a "binary-state" digit has one state out of two possible states and a "ternary-state" digit has one state out of three possible states.

Thus by investigating whether the relevant elements of a signal upon arrival at its destination has one of the predetermined permutations, one can determine whether it has been involved in a collision during transmission.

Preferably, the relevant elements in the signal are pairs of digits.

In one form of the invention, an element is formed of any one of predetermined permutations of two ternary-state digits. Thus each digit can have any one of three carrier states, namely "high frequency carrier", "no carrier" and "low frequency carrier". Also preferably there are only three predetermined permutations which are permitted i.e. upon generation the signal is composed of elements of only three permitted permutations. Thus any signal detected at a later stage having no element of any permutation other than one of those three must have been involved in a collision. This choice of numbers of digits in an element and numbers of predetermined permutations provides high level of protection without excessive redundancy of information.

Preferably at least one of the stations has means to block any signal which has a collision-responsive element with a permutation other than a predetermined one. Also the network may have means to determine what part of the signal contains the collision-responsive elements and means to identify whether the permutation of the element(s) is a predetermined one; it may also have means to send information on the identified permutation to a central control unit for the network. Furthermore it may have means to determine the original composition, before collision, of data signals which have been detected as including permutations other than the predetermined ones.

The present invention also provides an encoder for a data distribution network, the encoder comprising:

means to form a digital signal having a plurality of elements of which at least one, the collision-responsive element(s), is formed of one of a number of predetermined permutations of multiple-state digits, whereby any significant corruptive-collision of said signal with another causes the collision-responsive element(s) to assume a permutation other than the predetermined permutations.

Furthermore, the present invention also provides a signal-collision detector for a data distribution network, the detector comprising: means to identify the state held by each part of a collision-responsive element in a signal;

and means to determine whether the permutation of the states within a collision-responsive element is a predetermined permutation.

The present invention is particularly suitable for a mains signalling control system (within a flat or house and/or between them) but clearly it is not restricted to that application. Thus it can also be used in a broadcast network or in a network with a transmission line whose principal function is the sending of the data signals. The transmission line can be formed of any one or more suitable mediums e.g. metallic wire or optical fibre.

In another form of the invention, an element is formed of any one of predetermined permutations of binary-state digits. This may provide a reduction in the installation costs of such a network in that there need only be a single carrier frequency, i.e. the two carrier states are "carrier" and "no carrier".

In another form of the invention, an element is formed of any one of predetermined permutations of quaternary-state digits. While this may provide a reduced protection against errors, it allows a higher rate of information transfer and is easier to implement. There can be added to this form of the invention error protection by providing, for example, cyclic redundancy checks or "check-sums".

In any of the forms of the invention the number of permitted permutations can be changed.

US—A—3 866 147 refers to a scheme for detecting errors in a signal by defining only some predetermined ones of all permutations of three-state digits as information carrying permutations.

In order that the invention may more readily be understood, a description is now given, by way of example only, reference being made to the accompanying drawings in which:

Figure 1 is a schematic diagram of a network embodying the present invention;

Figure 2 is a representation of the three permitted permutations of ternary states for an element.

Figure 3 shows the composition of a signal packet for use in the network of Figure 1;

Figure 4 shows an appliance for use in the network of Figure 1;

Figures 5 and 6 illustrate an encoder and a decoder, respectively, for the network of Figure 1.

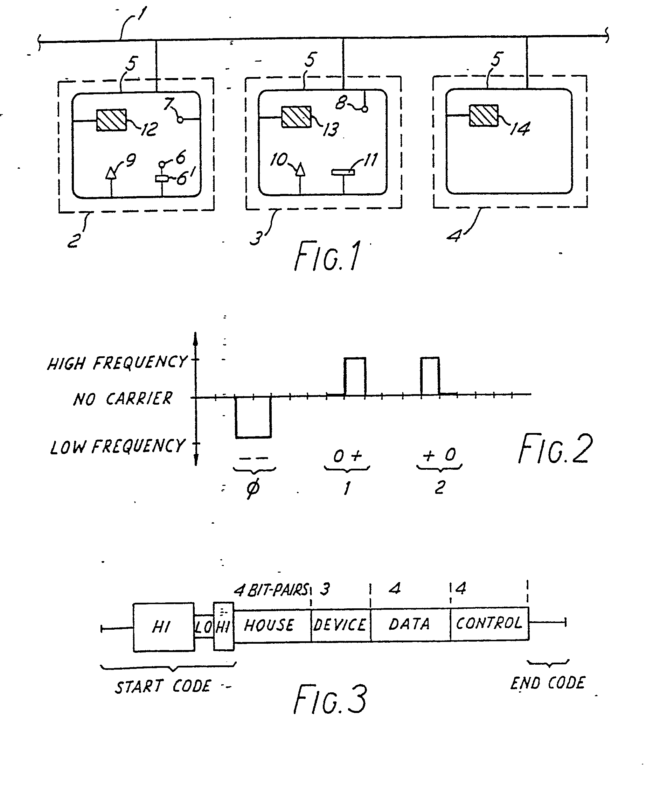

In the mains-borne control system shown schematically in Figure 1, part of the electrical mains supply 1 services individual consumers in separate houses 2, 3 and 4 (shown by broken lines). The mains circuit within each house is represented as a loop 5, to which there are connected a number of electrical appliances, e.g. lights 6, 7, 8, thermostats 9, 10 and electric fire 11. Each appliance has an associated interface unit 6' etc (but shown only for 6). Each house 2, 3 and 4 has a controller 12, 13 and 14 respectively, which can generate and send selectively control signals to any of those appliances in that house by suitably coding the signal to designate the appropriate recipient. The signal can effect any of the following operations as required: turning the appliance on or off; varying the power input to the appliance, e.g. to dim or brighten a light or to turn a fire up or down; instructing the appliance to reply to a particular question e.g. to determine the states of the appliance or to measure a variable (e.g. local temperature). However, a controller (e.g. 12) in a house 2 is not capable of generating a control signal for an appliance (e.g. fire 11) in another house 3.

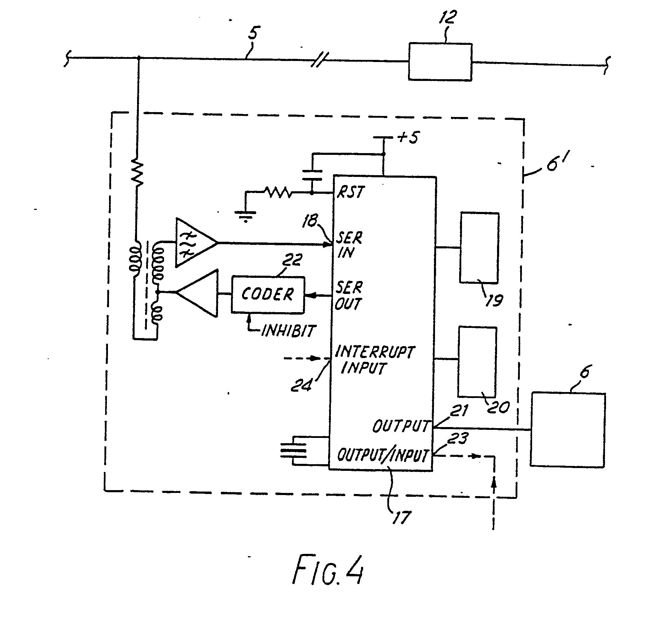

A control signal (which may be a command or a message signal) suitable for use in the network of Figure 1 is a stream of digits each of which can have any one of three carrier states, namely "high frequency carrier", "no carrier" and "low frequency carrier", represented by "+", "0" and "−" respectively. The digit stream is divided into elements which are pairs of digits. Each digit pair is permitted to have only some of the possible permutations of the carrier states, namely "− −", "0+", and "+0" as shown in Figure 2. The elements within a stream are arranged into groups which indicate respectively (see Figure 3) the code of the house to be addressed, the code of the device to be addressed, the encoded data and the encoded control instructions. Clearly the controllers 12, 13 and 14 can each only generate the house address code for that house, 2, 3 or 4 respectively.

Each control signal has an introductory start code of three digits with no carrier, four digits of high frequency carrier, then a single digit of low frequency and one of high frequency to indicate the start of the digit pairs which follow. Each control signal is terminated by three digits with no carrier.

Each of the controllers and each of the appliances has a detector (not shown in Figure 1) capable of determining the carrier state of each digit in any signal received at that unit and hence the permutation of each element. Thus if the detector finds any element with a permutation other than any of those represented in Figure 2, that unit does not accept the control signal containing that element. Moreover from noting the permutation, the detector can determine to a certain extent what the original elements were prior to the collision, using the following table.

TABLE

| Detected permutation | Original permutations | |
| --- | --- | --- |
| 0  0 | − − : − − | (out of phase) |
| | 0 + : 0 + | " |
| | + 0 : + 0 | " |
| + + | 0 + : + 0 | |
| − 0 | − − : 0 + | |
| 0 − | − − : + 0 | |

The interface unit 6' (shown in Figure 4) for light 6 has a microprocessor 17 which analyses each of the signals passing along loop 5 and then takes appropriate action as well as acting as the detector as described above. More specifically, any such signal is fed in through input 18 and then (provided it is in the

3

format of a control signal) it is decoded with microprocessor 17 and a comparison made between the signal's house address code and the code for house 2 which is held in the house code reference unit 19.

If the two codes correspond, i.e. the control signal is intended for use within house 2, then a similar comparison is made between the signal's device address code and the code for light 6 which is held in appliance code reference unit 20. Only if these two codes also correspond, will the microprocessor 17 proceed to analyse the data and control sections of the signal and take appropriate action. This may result in, for example, a variation in the power supplied to light unit 6 (by transmission of a signal from output 21) and/or the sending of a return signal to controller 12 indicating the status of light 6. Such a return signal is encoded in separate coder 22 before being fed into loop 5.

In a modification of interface unit 6' for use with a sensing device (e.g. thermostat 9) as distinct from light 6, the processor sends out an appropriate signal from terminal 23 which also acts as an input for the return signal from the sensing device.

In another modification, a second appliance (usually a burglar alarm or hazard alarm) is connected to an interrupt input 24 of the microprocessor 17 such that if an alarm signal is received at input 24, the microprocessor immediately stops whatever operation it is currently doing, stores the information on that operation and then gives top priority to the transmission of the alarm signals to controller 12.

In another modification, the mains 1 has a master controller which is able to generate and send control signals suitably coded for any or all of the houses. Thus, using a suitable control signal, a gas meter within house 2 can be interrogated and the information on the reading is returned to the master controller. This master controller can generate any of the address codes for the 2, 3 and 4 wherever required.

In any of the situations in which the microprocessor 17 sends a return signal out, it can additionally or alternatively send it to a controller outside the house 2.

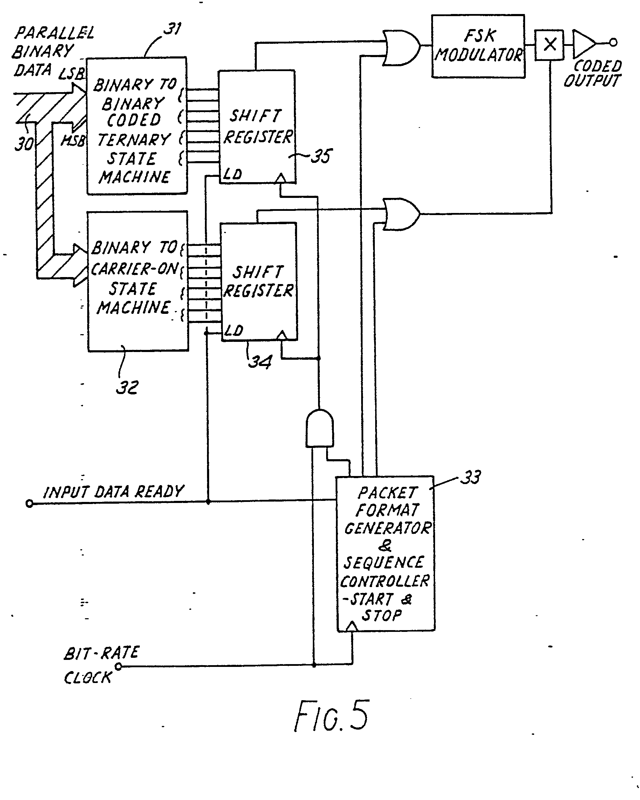

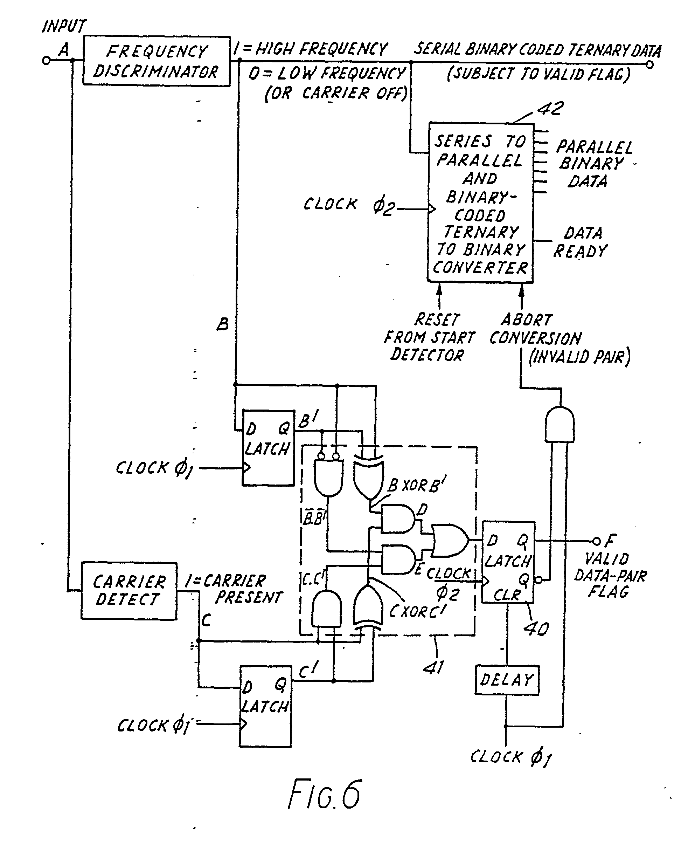

In the encoder of Figure 5, parallel binary data is passed along bus 30 and fed into a state machine 31 (to convert it from binary to binary coded ternary) and into state machine 32 (to incorporate carrier signals). Meanwhile another unit 33 (incorporating another state machine, a signal generator and a sequence controller) is suitably regulated in order to insert coding into the processed data via shift registers 34 and 35; thereafter the resultant signal is passed through an FSK modulator 36 and transmission gate 37 to provide its carrier-on form. In Figure 6 there is shown the corresponding decoder in which latch unit 40 is used to accept only those signals with permitted permutations. Thus the arrangement of gate devices within detector unit 41 is designed such that Q of latch unit 40 goes high for a valid signal (thereby allowing conversion unit 42 to convert the data signal) whereas $\overline{Q}$ of latch 40 goes high for an invalid signal (thereby making conversion unit 42 abort conversion of the data signal). Conversion unit 42 corresponds to the reverse arrangement of components within Figure 5.

The network described above can readily be modified to have digits of multiple-states other than ternary (e.g. binary or quanternary) and to have numbers of predetermined, permitted permutations other than three.

**Claims**

1. A data distribution network having:
a pathway along which information signals can be sent;
a plurality of stations, interconnected by the pathway; for reception and/or transmission of information signals;
means to determine the occurrence of a corruptive collision between signals in the network;
the collision-determining means comprising means to generate a digital signal for transmission within the network, said signal being formed of a plurality of elements of which at least one, the collision-responsive element(s), is formed of one of a number of predetermined permutations of multiple-state digits, whereby any significant corruptive collision of said signal with another causes the collision-responsive element(s) to assume a permutation other than the predetermined permutations;
the collision-determining means further comprising means, in at least one of the stations, to detect whether a corruption-responsive element in a signal has one of the predetermined permutations.

2. A network according to Claim 1, whereby at least one of the stations has means to block any signal which has a collision-responsive element with a permutation other than a predetermined one.

3. A network according to Claim 1 or 2, comprising means to determine what part of the signal contains the collision-responsive elements and means to identify whether the permutation of the element(s) is a predetermined one.

4. A network according to any one of Claims 1 to 3, comprising means to send information on the identified permutation to a central control unit for the network.

5. A network according to any one of Claims 1 to 4, comprising means to determine the original composition, before collision, of data signals which have been detected as including permutations other than the predetermined ones.

6. A network according to any one of Claims 1 to 5, whereby each element comprises two ternary state digits.

7. An encoder for a data distribution network according to Claim 1, the encoder comprising:
means to form a digital signal having a plurality of elements of which at least one, the

# EP 0 120 640 B1

collision-responsive element(s), is formed of one of a number of predetermined permutations of multiple-state digits, whereby any significant corruptive-collision of said signal with another causes the collision-responsive element(s) to assume a permutation other than the predetermined permutations.

8. A signal-collision detector for a data distribution network according to Claim 1, the detector comprising, means to identify the state held by each part of a collision-responsive element in a signal;

and means to determine whether the permutation of the states within a collision-responsive element is a predetermined permutation.

## Patentansprüche

1. Datenverteilungs-Netzwerk mit:

einem Weg, entlang dem Informationssignale gesendet werden können;

einer Vielzahl von durch den Weg miteinander verbundenen Stationen zum Empfang und/oder zum Aussenden von Informationssignalen;

Mitteln zur Bestimmung des Auftretens einer verfälschenden Kollision zwischen Signalen in dem Netzwerk;

wobei die eine Kollision bestimmenden Mittel Mittel umfassen, um ein digitales Signal für die Aussendung innerhalb des Netzwerks zu erzeugen, wobei das Signal aus einer Vielzahl von Elementen gebildet wird, von denen wenigstens eines, das auf eine Kollision ansprechende Element, aus einer von einer Anzahl von vorherbestimmten Permutationen von Ziffern mit Mehrfachzustand gebildet wird, wodurch jede ausgeprägte verfälschende Kollision des genannten Siganls mit einem anderen bewirkt, daß das auf die Kollision ansprechende Element eine andere Permutation annimmt als die vorherbestimmten Permutationen;

wobei die eine Kollision bestimmenden Mittel ferner Mittel in wenigstens einer der Stationen umfassen, um festzustellen, ob ein auf eine Verfälschung ansprechendes Element in einem Signal eine der vorherbestimmten Permutationen hat.

2. Netzwerk nach Anspruch 1, bei dem wenigstens eine der Stationen Mittel hat, um jedes Signal zu blockieren, das ein auf eine Kollision ansprechendes Element mit einer Permutation hat, die anders ist als eine der vorherbestimmten Permutationen.

3. Netzwerk nach Anspruch 1 oder 2, mit Mitteln der Bestimmung, welcher Teil des Siganls die auf eine Kollision ansprechenden Elemente enthält, und mit Mitteln zur Identifizierung, ob die Permutation des Elements bzw. der Elemente eine vorherbestimmte Permutation ist.

4. Netzwerk nach einem der Ansprüche 1 bis 3, mit Mitteln, um Informationen über die identifizierte Permutation zu einer zentralen Steuereinheit für das Netzwerk zu senden.

5. Netzwerk nach einem der Ansprüche 1 bis 4, mit Mitteln, um von Datensignalen, von denen festgestellt wurde, daß sie andere als die vorherbestimmten Permutationen enthalten, ihre ursprüngliche Zusammensetzung vor der Kollision zu bestimmen.

6. Netzwerk nach einem der Ansprüche 1 bis 5, bei dem jedes Element zwei Ziffern mit ternärem Zustand umfaßt.

7. Kodierer für ein Datenverteilungs-Netzwerk nach Anspruch 1, der Mittel umfaßt, um ein digitales Signal zu bilden, das eine Vielzahl von Elementen hat, von denen wenigstens eines, das auf eine Kollision ansprechende Element, aus einer von einer Anzahl von vorherbestimmten Permutationen von Ziffern mit Mehrfachzustand gebildet wird, wodurch jede ausgeprägte verfälschende Kollision den genannten Signals mit einem anderen bewirkt, daß das auf die Kollision ansprechende Element eine andere Permutation annimmt als die vorherbestimmten Permutationen.

8. Signal-Kollisionsdetektor für ein Datenverteilungs-Netzwerk nach Anspruch 1, der Mittel umfaßt, um den Zustand zu identifizieren, der von jeden Teil eines auf eine Kollision ansprechenden Elements in einem Signal gehalten wird, sowie Mittel, um zu bestimmen, ob die Permutationen der Zustände innerhalb eines auf eine Kollision ansprechenden Elements eine vorherbestimmte Permutation ist.

## Revendications

1. Un réseau du distribution de données comportant:

un trajet le long duquel des signaux d'information peuvent être émis;

une pluralité de stations, interconnectées par le trajet, pour une réception et/ou une transmission de signaux d'information;

des moyens pour déterminer la production d'une collision perturbatrice entre des signaux dans le réseau;

les moyens de détermination de collision comprenant des moyens pour produire un signal numérique pour une transmission à l'intérieur du réseau, ledit signal étant formé d'une pluralité d'éléments dont au moins un, l'élément sensible à une collision, est formé d'un certain nombre de permutations prédéterminées de chiffres à états multiples, de façon qu'une collision perturbatrice importante dudit signal avec un autre fasse en sorte que le ou les éléments sensibles à une collision prennent une permutation autre que les permutations prédéterminées;

les moyens de détermination de collision comprenant en outre des moyens, dans au moins une des

EP  0 120 640  B1

stations, pour détecter si un élément sensible à une perturbation dans un signal comporte une des permutations prédéterminées.

2. Un réseau selon la revendication 1, dans lequel au moins une des stations comporte des moyens pour arrêter un signal comportant un élément sensible à une collision avec une permutation autre qu'une permutation prédéterminée.

3. Un réseau selon la revendication 1 ou 2, comprenant des moyens pour déterminer quelle partie du signal contient les éléments sensibles à une collision et des moyens pour identifier si la permutation du ou des éléments est une permutation prédéterminée.

4. Un réseau selon une quelconque des revendications 1 à 3, comprenant des moyens pour envoyer une information concernant la permutation identifiée à une unité centrale de commande du réseau.

5. Un réseau selon une quelconque des revendications 1 à 4, comprenant des moyens pour déterminer la composition d'origine, avant collision, de signaux de données qui ont été détectés comme comprenant des permutations autres que les permutations prédéterminées.

6. Un réseau selon une quelconque des revendications 1 à 5, dans lequel chaque élément comprend deux chiffres d'état ternaire.

7. Un codeur pour un réseau de distribution de données selon la revendication 1, le codeur comprenant:

des moyens pour former un signal numérique comportant une pluralité d'éléments dont au moins un, l'élément sensible à une collision, est formé de l'un d'un certain nombre de permutations prédéterminées de chiffres à états multiples, de manière qu'une collision perturbatrice importante dudit signal avec un autre fasse en sorte que le ou les éléments sensibles à une collision prennent une permutation autre que les permutations prédéterminées.

8. Un détecteur de collision de signal pour un réseau de distribution de données selon la revendication 1, le détecteur comprenant; des moyens pour identifier l'état maintenu par chaque partie d'un élément sensible à une collision dans un signal; et des moyens pour déterminer si la permutation des états à l'intérieur d'un élément sensible à une collision est une permutation prédéterminée.

*FIG.1*

*FIG.2*

HIGH FREQUENCY

NO CARRIER

LOW FREQUENCY

$$\underbrace{--}_{\emptyset} \qquad \underbrace{0\,+}_{1} \qquad \underbrace{+\,0}_{2}$$

| | | 4 BIT-PAIRS | 3 | 4 | 4 | |
|---|---|---|---|---|---|---|
| HI | LO HI | HOUSE | DEVICE | DATA | CONTROL | |

START CODE

END CODE

*FIG.3*

FIG. 4

EP 0 120 640 B1

PARALLEL BINARY DATA

LSB

BINARY TO BINARY CODED TERNARY STATE MACHINE — 31

SHIFT REGISTER — 35

LD

FSK MODULATOR

CODED OUTPUT

30

HSB

BINARY TO CARRIER-ON STATE MACHINE — 32

SHIFT REGISTER

LD — 34

INPUT DATA READY

PACKET FORMAT GENERATOR & SEQUENCE CONTROLLER -START & STOP — 33

BIT-RATE CLOCK

FIG.5

3

FIG.6